# EUROPÄISCHE PATENTSCHRIFT

(11) **EP 0 495 753 B1**
(45) Veröffentlichungstag und Bekanntmachung des Hinweises auf die Patenterteilung: **16.07.1997**
(21) Anmeldenummer: 92810007.2
(22) Anmeldetag: 07.01.1992
(51) Int. Cl.: C09B 62/09, D06P 1/382

(54) **Reaktivfarbstoffe, Verfahren zu deren Herstellung und deren Verwendung**
Reactive dyes, methods of their preparation and their use
Colorants réactifs, procédés de leur préparation et leur utilisation

(30) Priorität: 16.01.1991 CH 106/91
(43) Veröffentlichungstag der Anmeldung: 22.07.1992
(73) Patentinhaber: Ciba Specialty Chemicals Holding Inc., 4057 Basel (CH)
(72) Erfinder: Tzikas, Athanassios, Dr., CH-4133 Pratteln (CH)

(56) Entgegenhaltungen:
- EP-A- 0 313 513
- CH-A- 614 969
- DE-A- 2 611 550
- GB-A- 869 279

## Beschreibung

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Färbeverfahren und Echtheitsniveau der Färbungen, vielfach noch nicht voll befriedigen. Aus der GB-A-869,279 sind Disazofarbstoffe der weiter unten angegebenen Formel (3) bekannt, die jedoch nicht die spezifischen die Reste R₄ und R₅ tragenden Kupplungskomponenten aufweisen. Die DE-A-2,611,550 offenbart über ein Diamin verdoppelte Fluortriazinyl-Monoazo-, -Metallkomplexazo- oder -Anthrachinonfarbstoffe.

Die Aufgabe der vorliegenden Erfindung ist es, neue Reaktivfarbstoffe zu finden, die für Färbe- und Druckverfahren geeignet sind und die einen hohen Fixiergrad und zugleich eine gute Auswaschbarkeit der nichtfixierten Anteile haben; ferner sollen die Farbstoffe allgemein gute Echtheiten und insbesondere einen Farbton im Orangebereich besitzen. Es hat sich gezeigt, dass die weiter unten definierten neuen Farbstoffe die gestellte Aufgabe weitgehend erfüllen.

Gegenstand der Erfindung sind daher Reaktivfarbstoffe der Formel 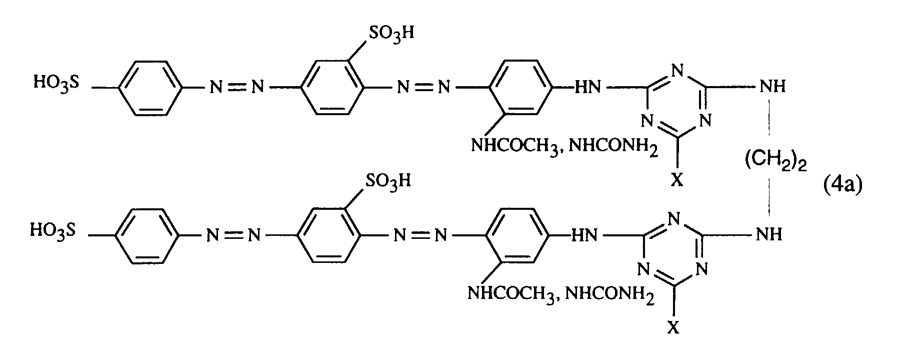 oder 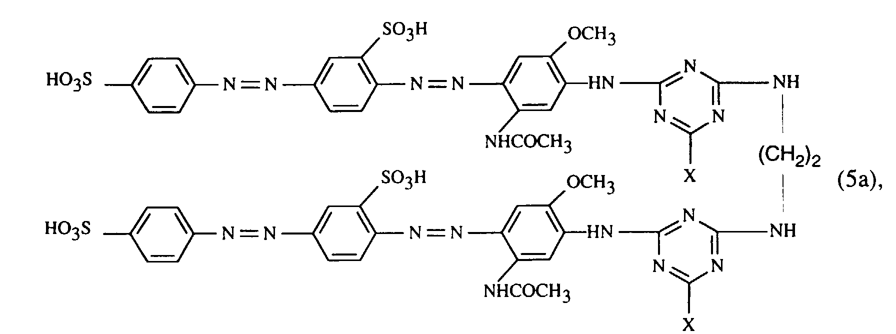 worin X Fluor oder insbesondere Chlor ist.

Ganz besonders bevorzugt sind die Reaktivfarbstoffe, worin X Chlor ist.

Einen weiteren Gegenstand der Erfindung stellen Reaktivfarbstoffe der Formel 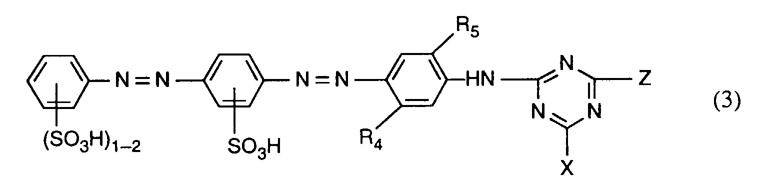 dar, worin R₄ Wasserstoff, Methoxy oder Ureido ist, R₅ für Wasserstoff, Methyl oder Methoxy steht, X Fluor oder Chlor bedeutet und Z eine aliphatische, araliphatische, aromatische oder heterocyclische von faserreaktiven Resten freie Aminogruppe ist.

Als Aminogruppe Z kommt z.B. in Betracht: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenethyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können. Die oben genannten Alkyl-, Cycloalky-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, C₁-C₄-Alkyl, C₁-C₄-Alkoxy, Acylaminogruppen, wie Acetylamino, Ureido, Hydroxy, Carboxy, Sulfomethyl und Sulfo.

Als Beispiele für den Rest Z in Formel (3) seien genannt: -NH₂, Methylamino, Ethylamino, Propylamino, Isopropylamino, Butylamino, β-(Acetylamino)ethylamino, Hexylamino, β-Methoxyethylamino, y-Methoxypropylamino, β-Ethoxyethylamino, N,N-Dimethylamino, N,N-Diethylamino, β-Chlorethylamino, β-Cyanethylamino, γ-Cyanpropylamino, β-Carboxyethylamino, Sulfomethylamino, β-Sulfoethylamino, β-Hydroxyethylamino, N,N-Di-β-hydroxyethylamino, γ-Hydroxypropylamino, Benzylamino, Phenethylamno, Cyclohexylamino, N-Methyl-N-phenylamino, N-Ethyl-N-phenylamino, N-Propyl-N-phenylamino, N-Butyl-N-phenylamino, N-β-Cyanethyl-N-phenylamino, N-Ethyl-2-methylphenylamino, N-Ethyl-4-methylphenylamino, N-Ethyl-3-sulfophenylamino, N-Ethyl-4-sulfophenylamino, Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1-)-amino, 4,6,8-Trisulfonaphthyl-(1)-amino, 6-Sulfonaphthyl-(2)-amino, Pyridyl-(2)-amino, Morpholino, Piperidino und Piperazino.

Bevorzugt sind Reaktivfarbstoffe der Formel (3), worin Z eine aromatische Aminogruppe, insbesondere eine Sulfo- oder Disulfophenylaminogruppe ist.

Ganz besonders bevorzugt sind die Reaktivfarbstoffe der Formel 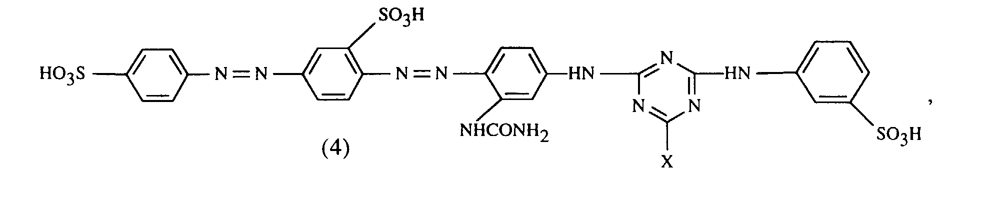 worin X Fluor oder insbesondere Chlor ist.

Die Herstellung der Reaktivfarbstoffe der Formel (3) ist dadurch gekennzeichnet, dass man eine Aminodisazoverbindung der Formel 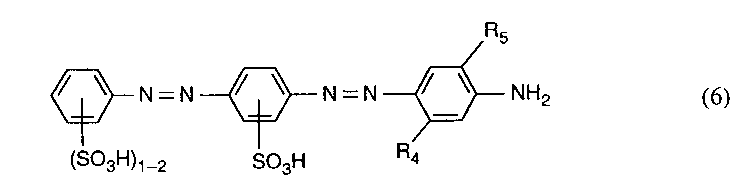 mit einem Triazin der Formel 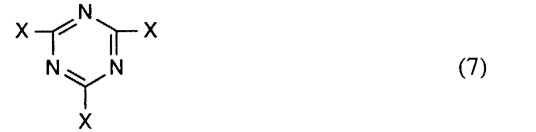 und einem Amin der Formel

H-Z (8)

in beliebiger Reihenfolge miteinander kondensiert, wobei R₄, R₅, X und Z die unter der Formel (3) angegebenen Bedeutungen haben.

Die Reaktivfarbstoffe der Formeln (4a) und (5a) werden in der Weise hergestellt, dass mindestens die zweifach molare Menge der Aminodisazoverbindung der Formel 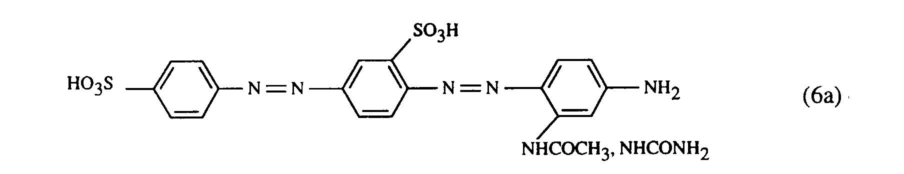 oder 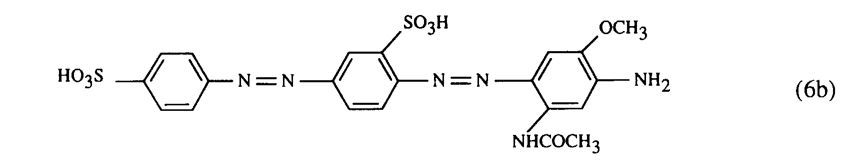 mit der zweifach molaren Menge Triazin der Formel 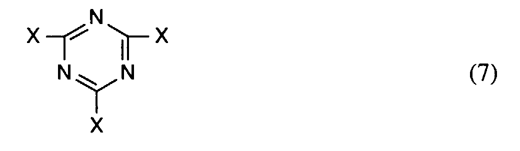 und einer molaren Menge 1,2-Ethylendiamin in beliebiger Reihenfolge miteinander kondensiert, wobei X Chlor oder Fluor ist.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Ausführungsform des erfindungsgemässen Verfahrens ist dadurch gekennzeichnet, dass man eine Aminodisazoverbindung der Formel (6) bzw. (6a) oder (6b) mit einem Triazin der Formel (7) kondensiert und das erhaltene primäre Kondensationsprodukt mit einem Amin der Formel (8) bzw. mit 1,2-Ethylendiamin kondensiert.

Eine weitere Ausführungsform des erfindungsgemässen Verfahrens ist dadurch gekennzeichnet, dass man eine Aminodisazoverbindung der Formel (6) bzw. (6a) oder (6b) mit einem primären Kondensationsprodukt aus einem Triazin der Formel (7) und einem Amin der Formel (8) bzw. mit 1,2-Ethylendiamin kondensiert.

Als Ausgangsstoffe, die zur Herstellung der Reaktivfarbstoffe der Formel (1) verwendet werden können, seien genannt:

Aminodisazoverbindungen der Formel (6):

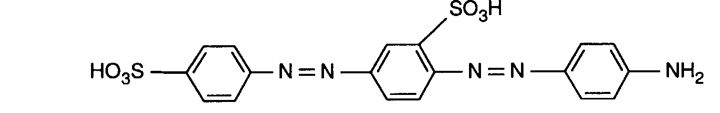

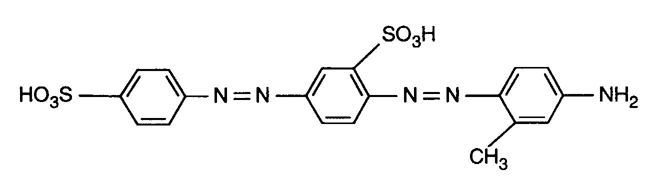

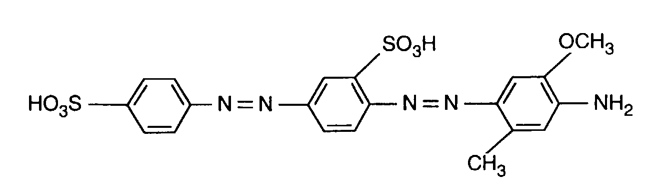

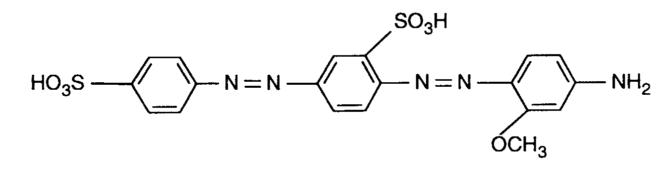

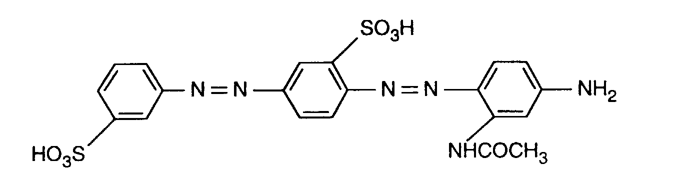

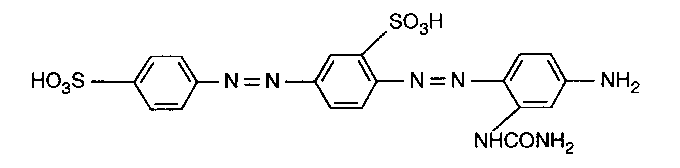

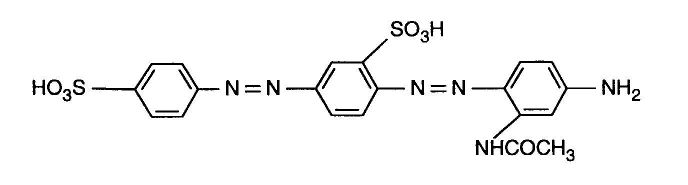

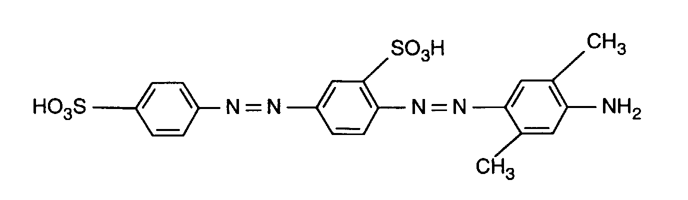

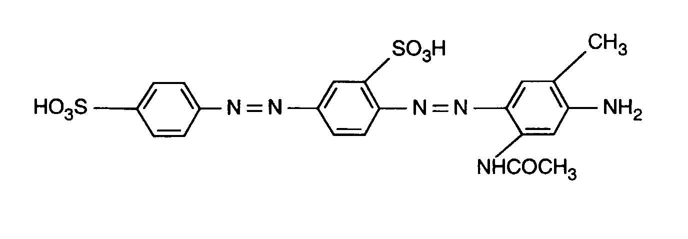

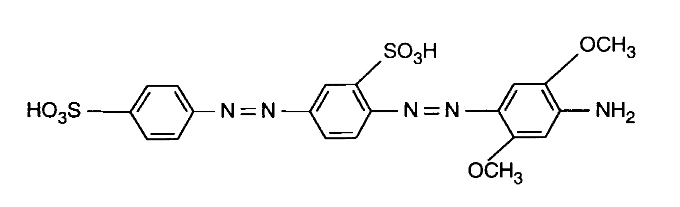

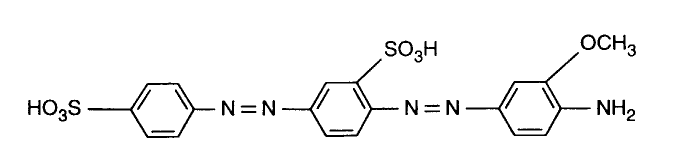

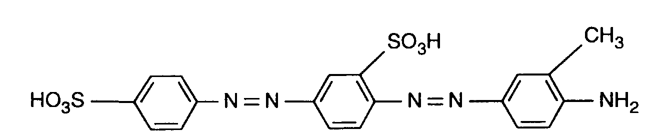

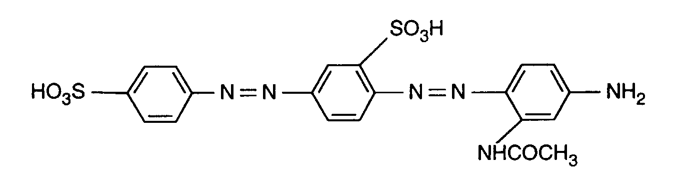

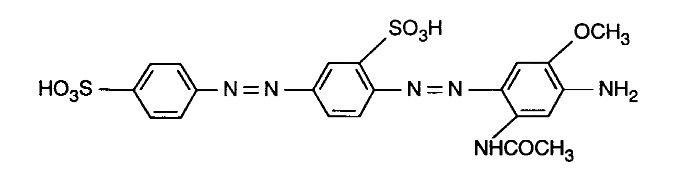

### 2,4,6-Trichlor-s-triazinoder 2,4,6-Trifluor-s-triazin

### Amine der Formel (8)

Ammoniak, Methylamin, Dimethylamin, Ethylamin, Diethylamin, Propylamin, Isopropylamin, Butylamin, Dibutylamin, Isobutylamin, sek.-Butylamin, tert.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminoethansulfonsäure, β-(Acetylamino)ethylamin, enzylamin, Phenethylamin, Cyclohexylamin, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyethylaminobenzol, N-β-Chlorethylaminobenzol, N-β-Cyanethylaminobenzol, N-β-Sulfoethylaminobenzol, 1-(N-Ethylamino)-2-3- oder 4-methylbenzol, 1-(N-Ethylamino)-2-, -3- oder -4-ethylbenzol, 1-(N-Ethylamino)-2-, -3- oder -4-chlorbenzol, 1-N-Ethylaminobenzol-3-oder 4-sulfonsäure, 1-(N-Ethylamino)-4-butylbenzol, N-n-Butylamino-3-methylbenzol, 1-(N-Ethylamino)-4-fluorbenzol, Anilin, o-, m- und p-Toluidin, 2,3-, 2,4-, 2,5-, 2,6-, 3,4-und 3,5-Dimethylanilin, o-, m- und p-Chloranilin, N-Methylanilin, N-Ethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Ethoxy-5-methoxyanilin, 4-Bromanilin, und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methan-sulfonsäure, 2-Aminotoluol-4-sulfonsäure, 2-Aminotoluol-5-sulfonsäure, p-Aminosalicyclsäure, 1-Amino4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamino-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8-und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin.

Die Herstellung der Disazoverbindungen der Formel (6), (6a) und (6b) ist an sich bekannt oder wird in Analogie zu bekannten Diazotierungs- und Kupplungsverfahren ausgeführt.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trichlor- oder 2,4,6-Trifluor-s-triazins der Formel (7) mit den Aminodisazoverbindungen und den Aminoverbindungen der Formel (8) erfolgen vorzugsweise in wässriger Lösung oder Suspension, bei niedriger Temperatur und bei schwach saurem, neutralem bis schwach alkalischem pH-Wert, so dass im fertigen Reaktivfarbstoff der Formel (3), (4a) oder (5a) noch ein Chlor- oder Fluoratom als abspaltbarer Rest übrig bleibt. Vorteilhaft wird der bei der Kondensation freiwerdende Chlor- oder Fluorwasserstoff laufend durch Zugabe wässriger Alkalihydroxide, -carbonate oder -bicarbonate neutralisiert. Auf eine Isolierung der Dichlor-oder Difluortriazin-Azoverbindung wird im allgemeinen verzichtet.

Die Reaktivfarbstoffe der Formel (3), (4a) oder (5a) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Interessant sind ferner lagerstabile, konzentrierte flüssige Farbstoffpräparationen der Reaktivfarbstoffe der Formel (3), (4a) oder (5a) sowie ihre Verwendung zur Herstellung von Klotzflotten, Färbebädern und vor allem Druckpasten, die zum Färben und Bedrucken von Fasermaterialien, insbesondere cellulosehaltigen Fasermaterialien verwendet werden.

Flüssige Farbstoffpräparationen haben Vorteile gegenüber der Pulverform, z.B. keine Staubentwicklung beim Ansetzen von Druckpasten sowie von Klotz- und Färbeflotten, keine Benetzungsprobleme durch Klumpenbildung, keine fleckigen Färbungen durch ungelöste Farbstoffpartikel. Solche flüssige Formulierungen sollten hoch konzentriert sein (mindestens 10 Gew.-% und vorzugsweise mehr als 15 Gew.-% Farbstoffgehalt) und mindestens über mehrere Monate in einem breiten Temperaturbereich (-10 bis +40°C) unverändert haltbar sein.

Als Ausgangslösung bzw. -suspension zur Herstellung der Farbstoffpräparationen kann man die direkt aus der Synthese erhaltene wässrige, gegebenenfalls Lösungsmittel enthaltende Lösung bzw. Suspension oder eine wässrige Anschlämmung der feuchten Press-oder Filterkuchen der Rohfarbstoffe von unterschiedlichem Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen das Kondensationsprodukt nicht oder nur äusserst mühsam aussalzbar ist, kann auch direkt die rohe Kondensations- bzw. Neutralisationslösung verwendet werden. Vorteilhaft verwendet man Ausgangslösungen bzw. -suspensionen, die 2 bis 50 % Farbstoff enthalten.

Man kann aber auch von dem trockenen Rohfarbstoffpulver ausgehen, wenn man es zunächst mit Wasser anschlämmt.

Bei den konzentrierten flüssigen Präparationen handelt es sich in der Regel um echte oder kolloidale Lösungen. Sie sind dünnflüssig (Viskosität von etwa 5 bis 300 cp/20°C) und gut lagerstabil, d.h. sie bleiben mindestens mehrere Monate bei Temperaturen von -20 bis +60°C, insbesondere -10 bis +40°C in gebrauchsfähigem Zustand. Diese Präparationen können bei der Herstellung von Klotzflotten, Färbebädern und Druckpasten sowohl mit Wasser als auch mit organischen Lösungsmitteln und/oder Verdickungsmittel versetzt werden, ohne dass der Farbstoff ausfällt oder dass es zu anderen Inhomogenitäten kommt. Mit den genannten Klotzflotten, Färbebädern und Druckpasten kann man z.B. Textilmaterialien aus natürlichen oder synthetischen, insbesondere cellulose-haltigen Fasermaterialien in bekannter Weise färben oder bedrucken.

Die flüssigen Farbstoffpräparationen enthalten vorzugsweise 20 bis 50 Gewichtsprozent, insbesondere 35 bis 45 Gewichtsprozent des Farbstoffes der Formel (3), (4a) oder (5a).

Besonders geeignet sind die stabilen konzentrierten flüssigen Farbstoffpräparationen zur Herstellung von Druckpasten für das Bedrucken von Cellulose-Fasermaterialien sowie für kontinuierliche Färbeverfahren.

Ein Verfahren zur Herstellung einer erfindungsgemässen flüssigen Präparation ist z.B. aus der EP-A-0 333 656 bekannt, worin auf einer Anlage für Umkehr-Osmose die Farbstofflösung entsalzt und aufkonzentriert wird.

Die Anwendung membrangebundener Filtriertechniken zur Herstellung von Zubereitungen wasserlöslicher organischer Farbstoffe ist bekannt. Das Verfahren geht von den wässrigen Suspensionen des Rohfarbstoffs aus, die mit Hilfe eines ersten Membrantrennverfahrens weitgehend von in Wasser löslichen Nebenprodukten befreit und deren Salzgehalt auf etwa die Hälfte verringert werden; dann folgt ein zweites Membrantrennverfahren.

In diesem ersten Membrantrennverfahren permeieren also die löslichen Nebenprodukte und ein Teil der Salze durch ein Membran, während der Farbstoff und in Wasser unlösliche Anteile zurückgehalten werden.

In dem zweiten Membrantrennverfahren wird dann die Farbstoffsuspension - gegebenenfalls nach einer Verdünnung mit Wasser - entsalzt und aufkonzentriert und schliesslich in eine verkaufsfertige flüssige oder feste Farbstoffzubereitung übergeführt.

Die eingesetzten Farbstofflösungen haben in der Regel einen Farbstoffgehalt von 5 bis 20 Gew.-% und einen Salzgehalt (anorganische Salze) von 1 bis 20 Gew.-%, insbesondere 1 bis 10 Gew.-%. Der pH-Wert liegt in der Regel im Bereich von 3 bis 10, vorzugsweise 3 bis 9. Unlösliche Anteile werden durch Mikrofiltration abgetrennt, die Aufkonzentrierung und Entsalzung wird so lange durchgeführt, bis ein Farbstoffgehalt von 10 bis 50 Gew.-% erreicht ist. Der Salzgehalt sinkt dabei unter 5 Gew.-%, z.B. 0,05 bis 5 Gew.-%, und vorzugsweise unter 1 Gew.-%, z.B. 0,05 bis 1 Gew.-%.

Zur Herstellung einer handelsfertigen Flüssigform ist die konzentrierte wässrige Farbstoffzubereitung gegebenenfalls nach Zugabe von den für Flüssigformulierungen üblichen Komponenten, wie Lösungsvermittlern, schaumdämpfenden Mitteln, Gefrierschutzmitteln, Feuchthaltemitteln, Tensiden, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe von Zusätzen, wie Bindemitteln, Entstäubungsmitteln, Netzmitteln, Puffersubstanzen, wie Alkalipolyphosphaten, Dinatriumhydrogenphosphat, Zitronensäure und/oder Ethylendiamintetraessigsäure, und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Der pH-Wert der handelsfertigen Flüssigformulierung der Reaktivfarbstoffe wird in der Regel durch Zugabe von Puffersubstanzen eingestellt. Der pH-Wert liegt etwa im Bereich 7,0 bis 8,5, vorzugsweise 8,0.

Die genannten Hilfs- oder Zusatzmittel können der Farbstofflösung natürlich nicht nur vor deren endgültiger Formulierung als Handelsform zugesetzt, sondern bereits vor oder während des erfindungsgemässen Verfahrens in die Lösung des Rohfarbstoffs eingebracht werden und sind damit wenigstens teilweise bereits in der Farbstofflösung, aus der die endgültige handelsfertige Farbstoffformulierung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfs- oder Zusatzmittel nicht durch eines der Membrantrennverfahren wieder vollständig aus der Lösung entfernt werden.

Die konzentrierten flüssigen Präparationen der Reaktivfarbstoffe der Formel (3), (4a) oder (5a) enthalten somit 10 bis 50 Gewichtsprozent Farbstoff, 0,05 bis 5 Gewichtsprozent eines anorganischen Salzes, z.B. NaCl, KCl, LiCl, soviel Puffersubstanzen, z.B. Mono-und Dinatriumphosphat oder Natriumtripolyphosphat oder Mischungen von Puffersubstanzen, so dass ein pH-Wert zwischen 7,0 und 8,5 eingestellt werden kann, sowie Wasser.

Die Reaktivfarbstoffe der Formel (3), (4a) oder (5a) zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtfixierten Anteile leicht entfernen lassen.

Die erfindungsgemässen Farbstoffe der Formel (3), (4a) oder (5a) liegen entweder in der Form ihrer freien Säure oder vorzugsweise als deren Salze vor. Als Salze kommen beispielsweise Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triethanolamins genannt.

Die Reaktivfarbstoffe der Formel (3), (4a) oder (5a) eignen sich zum Färben und Bedrucken der verschiedensten Materialien, wie Seide, Leder, Wolle, Polyamidfasern und Polyurethane, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden.

Sie eignen sich vor allem zum Bedrucken von textilen cellulosehaltigen Fasermaterialien, insbesondere Baumwolle, ebenso aber auch zum Bedrucken von stickstoffhaltigen Fasern, z.B. von Wolle, Seide oder Wolle enthaltenden Mischgeweben. Sie eignen sich insbesondere für schonende Druckverfahren, wie z.B. mit Natriumpropionat als Fixieralkali.

Es empfiehlt sich, die Färbungen und Drucke einem gründlichen Spülen mit kaltem und heissem Wasser, gegebenenfalls unter Zusatz eines dispergierend wirkenden und die Diffusion der nichtfixierten Anteile fördernden Mittels, zu unterwerfen.

Bei der Anwendung in der Praxis werden die erfindungsgemässen Farbstoffe vorteilhaft als flüssige Färbe- oder Druckpräparate eingesetzt.

Die Herstellung der Monoazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Erläuterungsbeispiel:

35,7 Teile 4-Aminoazobenzol-3,4'-disulfonsäure der Formel 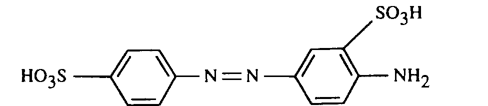 werden in 500 Teilen Wasser gelöst. Man fügt 24 Teile 30%-ige Natriumnitritlösung zu und giesst die Lösung in eine Mischung aus 33 Teilen 30%-iger Salzsäure und 33 Teilen gestossenem Eis. In die so erhaltene Diazolösung werden 15 Teile 1-Amino-3-acetylaminobenzol langsam eingetropft. Mit verdünnter Natriumhydroxidlösung wird ein pH-Wert zwischen 2 und 3 gehalten, bis die Kupplung zu Ende ist.
Die zum Teil ausgefallene Disazoverbindung wird mit wenig Natriumhydroxidlösung neutral gelöst. Ferner werden 20 Teile Aminobenzol-3-sulfonsäure in 400 Teilen Wasser unter Zusatz von Natriumcarbonat neutral gelöst. Bei 0° werden unter kräftigem Rühren 20,5 Teile Cyanurchlorid rasch zugetropft. Durch gleichzeitige Zugabe von wässriger Natriumcarbonatlösung wird ein pH-Wert zwischen 5 und 6,5 gehalten. Nach Beendigung der Umsetzung liegt eine Suspension vor; zu dieser Suspension giesst man langsam die neutrale Lösung der oben beschriebenen Disazoverbindung. Die Temperatur der Reaktionsmischung steigt auf etwa 40°, während mit wässriger Natriumcarbonatlösung ein pH-Wert zwischen 6 und 7 gehalten wird.

Nach beendeter Umsetzung wird der Reaktivfarbstoff durch Zugabe von NaCl ausgefällt, isoliert und im Vakuum getrocknet. Der erhaltene Reaktivfarbstoff entspricht in Form der freien Säure der Formel 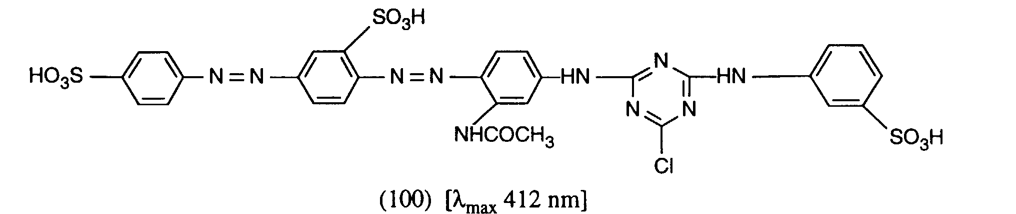 Er färbt Baumwolle aus wässriger Flotte in echten orangen Tönen.

Wenn man wie oben angegeben verfährt, jedoch anstelle von 15 Teilen 1-Amino-3-acetylaminobenzol 24 Teile 1-Amino-3-acetylamino-6-methoxybenzol verwendet, so erhält man den Reaktivfarbstoff der in Form der freien Säure der Formel 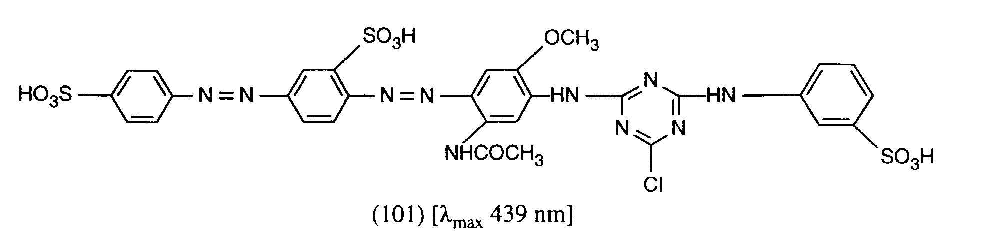 entspricht.

Verwendet man anstelle von Cyanurchlorid zur Herstellung der Verbindungen (100) oder (101) eine äquivalente Menge Cyanurfluorid, erhält man die Reaktivfarbstoffe der Formeln

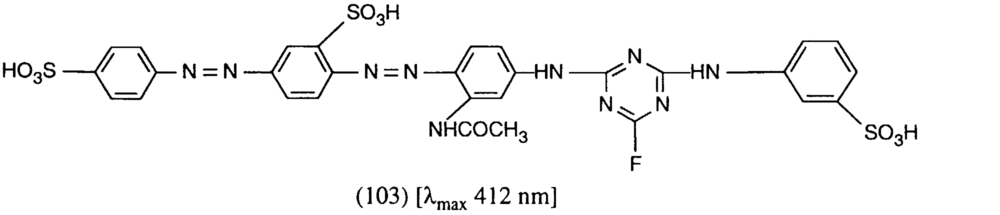

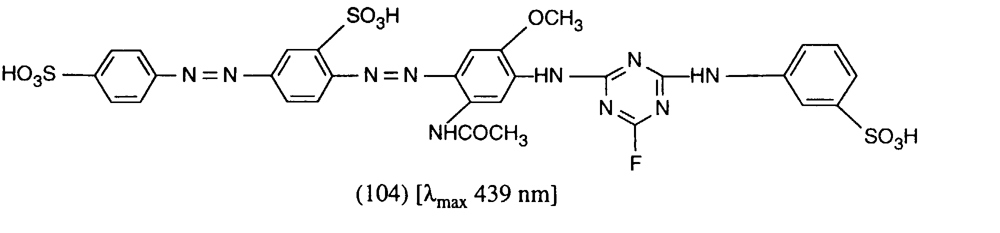

### Beispiele 1-6:

Wenn man wie im Erläuterungsbeispiel angegeben verfährt und anstelle der dort angegebenen Aminodisazoverbindung eine der folgenden Aminodisazoverbindungen in äquivalenter Menge einsetzt, so erhält man Reaktivfarbstoffe, die cellulosehaltige Fasermaterialien in echten orangen bis braunen Tönen färben:

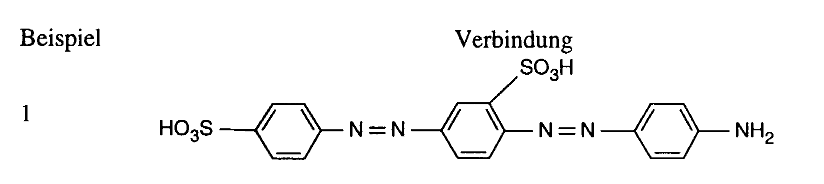

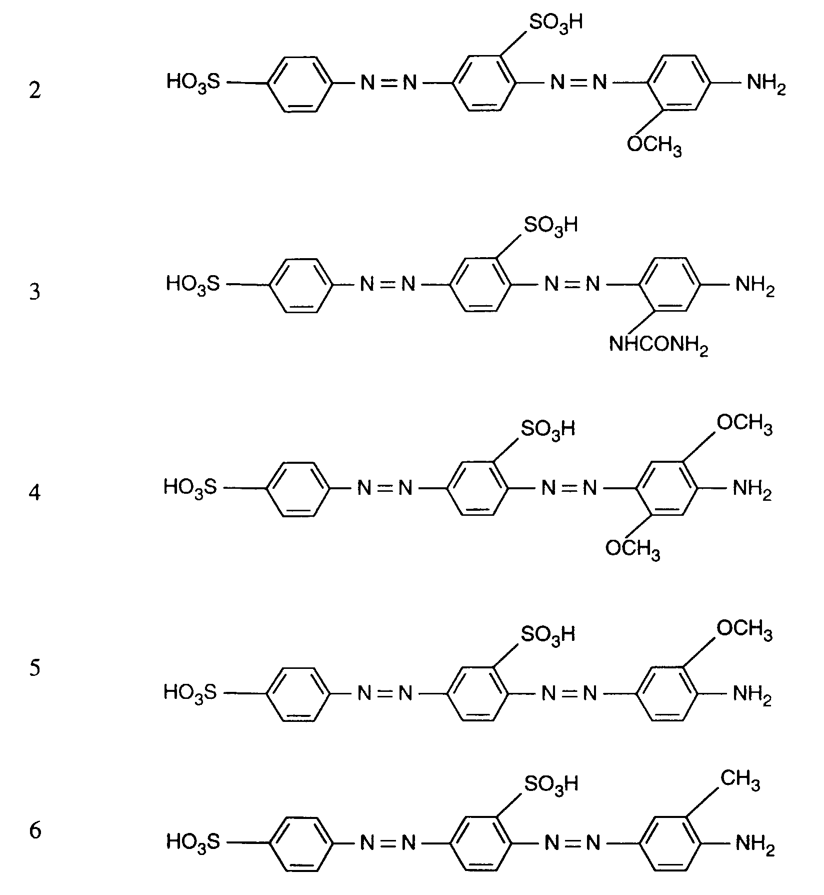

### Beispiele 7-10:

Verwendet man anstelle der Aminobenzol-3-sulfonsäure zur Herstellung der Verbindungen (100), (103), (101) oder (104) eine halbäquivalente Menge von 1,2-Ethyldiamin, erhält man die Reaktivfarbstoffe der Formeln

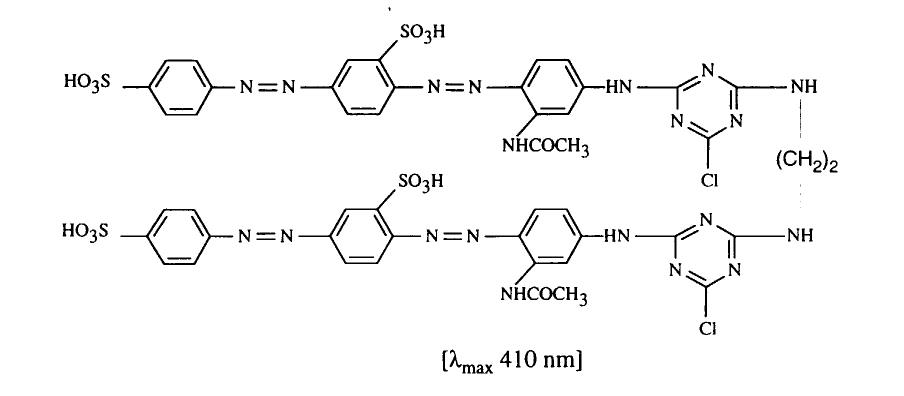

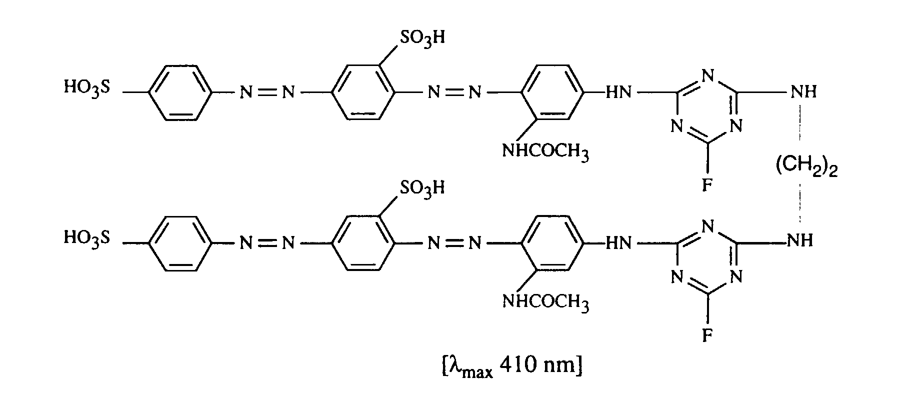

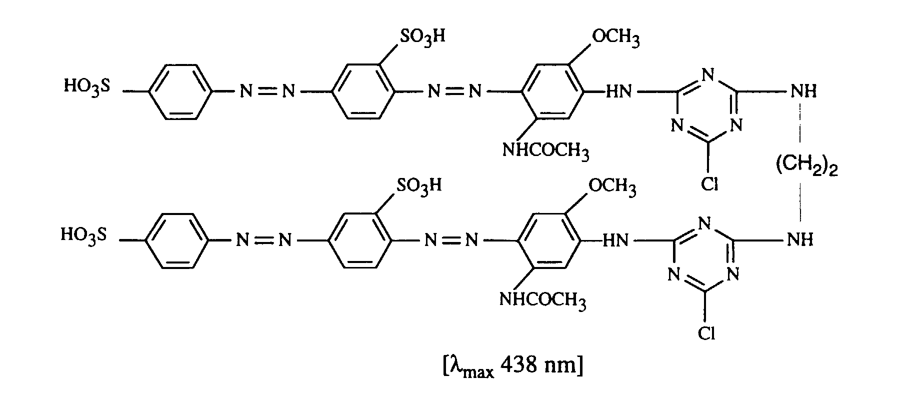

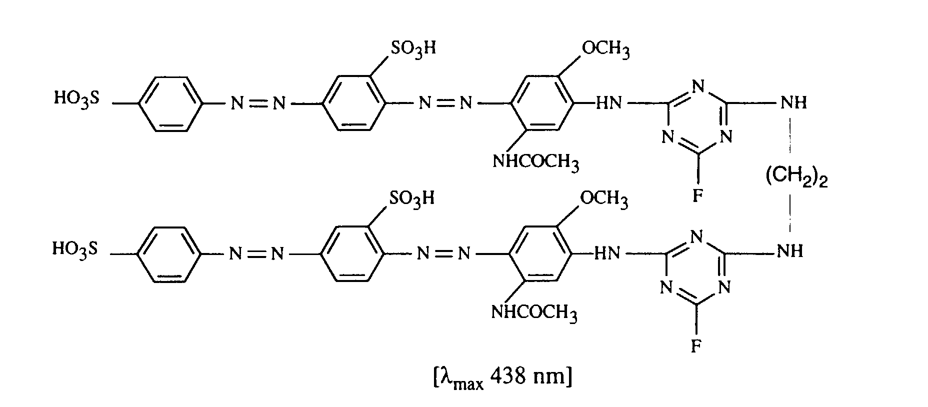

### Beispiele 11 und 12:

Verwendet man anstelle des 1-Amino-3-acetylaminobenzols zur Herstellung der Verbindungen (100) oder (103) eine äquivalente Menge von 1-Amino-3-ureidoaminobenzol und anstelle der Aminobenzol-3-sulfonsäure eine halbäquivalente Menge von 1,2-Ethyldiamin erhält man die Reaktivfarbstoffe der Formeln

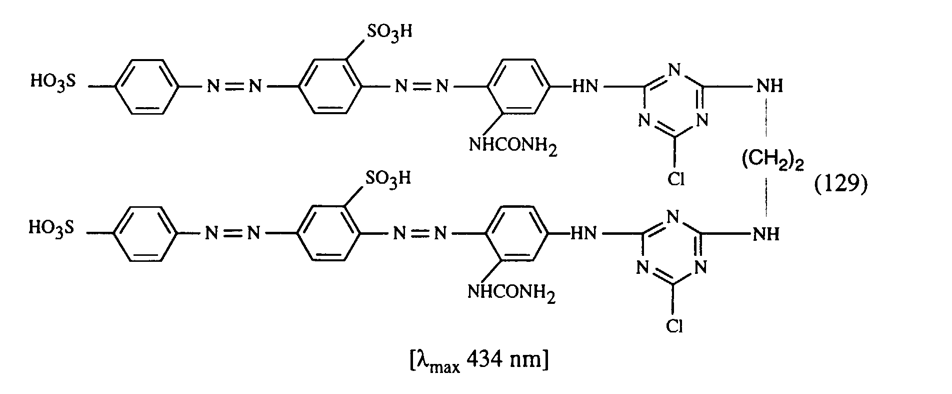

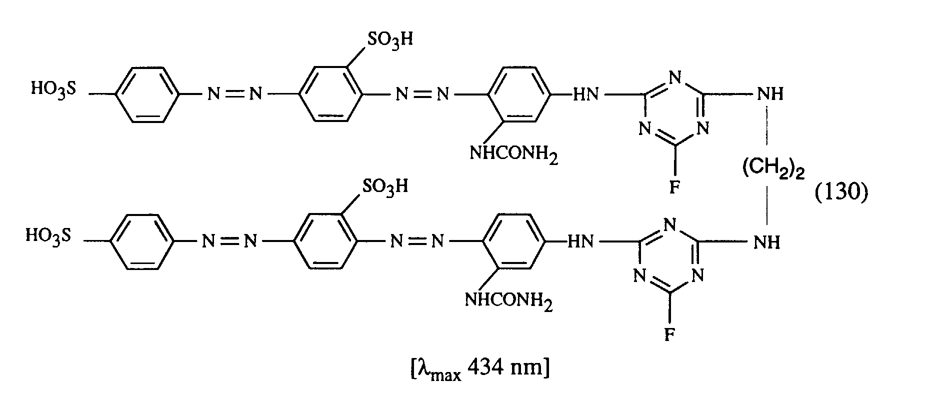

### Färbevorschrift 1

2 Teile des gemäss Beispiel 1 erhaltenen Farbstoffes werden unter Zusatz von 5 bis 20 Teilen Harnstoff und 2 Teilen wasserfreiem Na₂CO₃ in 100 Teilen Wasser bei 20 bis 50°C gelöst. Mit der erhaltenen Lösung wird ein Baumwollgewebe imprägniert, so dass es um 60 bis 80 % seines Gewichtes zunimmt, und dann getrocknet. Danach wird während 1 1/2 bis 5 Minuten bei 140 bis 210°C thermofixiert, dann während einer Viertelstunde in einer 0,1%-igen Lösung eines ionenfreien Waschmittels bei Siedetemperatur geseift, gespült und getrocknet.

### Färbevorschrift 2

2 Teile des gemäss Beispiel 1 erhaltenen Farbstoffes werden in 2000 Teilen Wasser unter Zusatz von 120 Teilen NaCl oder wasserfreiem Na₂SO₄ bei 75°C gelöst. Man geht mit 100 Teilen eines Baumwollgewebes in dieses Färbebad ein und hält die Temperatur während 30 bis 60 Minuten konstant. Danach werden 10 Teile wasserfreies Na₂CO₃ und 4 ml Natronlauge (36%-ig) zugegeben. Die Temperatur wird weitere 45 bis 60 Minuten bei 75 bis 80°C gehalten, dann wird während 15 Minuten in einer 0,1%-igen Lösung eines ionenfreien Waschmittels bei Siedetemperatur geseift, gespült und getrocknet.

### Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Danach imprägniert man das Gewebe mit einer 20°C warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101°C, spült, seift während einer Viertelstunde in einer 0,3%-igen Lösung eines ionenfreien Waschmittels bei Siedetemperatur, spült und trocknet.

### Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile wasserfreies Na₂CO₃ und nochmals 60 Teile Natriumchlorid zugegeben werden. Man hält die Temperatur 30 Minuten bei 60°C, spült und seift dann die Färbung während 15 Minuten in einer 0,3%-igen Lösung eines ionenfreien Waschmittels bei Siedetemperatur, spült und trocknet.

### Druckvorschrift 1

2 Teile des gemäss Beispiel 1 hergestellten Farbstoffes werden unter schnellem Rühren in 100 Teile einer Stammverdickung, enthaltend 45 Teile 5%-ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100°C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

### Druckvorschrift 2

6 Teile des Reaktivfarbstoffes der Formel (101) aus Beispiel 1 werden unter schnellem Rühren in 94 Teile einer Stammverdickung, enthaltend 50 Teile 5 prozentige Natriumalginat-Verdickung, 39,4 Teile Wasser, 3,5 Teile Natriumpropionat, 1 Teil m-nitrobenzolsulfonsaures Natrium sowie 0,1 Teil 4-prozentige wässrige Formaldehyd-Lösung, eingestreut. Mit der so erhaltenen Druckpaste bedruckt man ein mercerisiertes Baumwollgewebe, trocknet und dämpft den erhaltenen bedruckten Stoff 8 Minuten bei 103°C im Sattdampf. Das bedruckte Gewebe wird dann gespült und anschliessend getrocknet. Es wird ein orangefarbener Druck erhalten.

## Patentansprüche (Patentansprüche für folgende(n) Vertragsstaat(en): BE, CH, DE, GB, FR, IT, LI)

1. Reaktivfarbstoffe der Formel 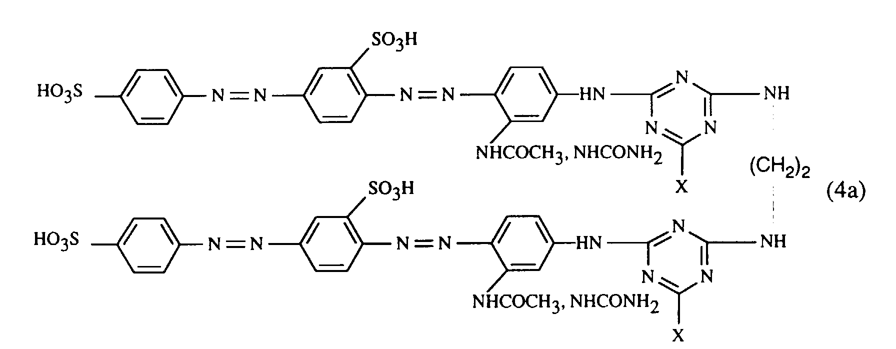 oder 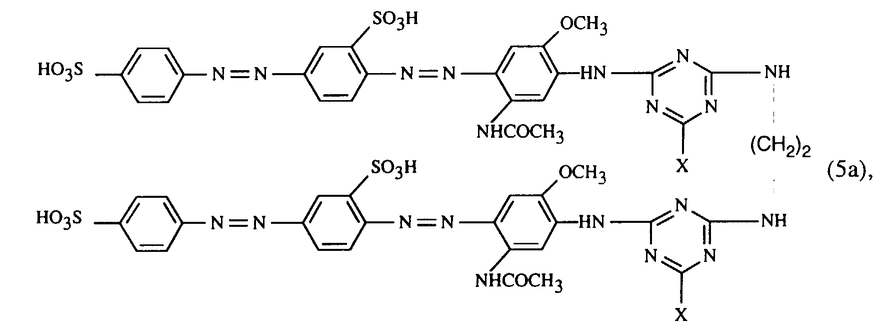 worin X Fluor oder Chlor ist.

2. Reaktivfarbstoffe gemäss Anspruch 1, worin X Chlor ist.

3. Reaktivfarbstoffe der Formel 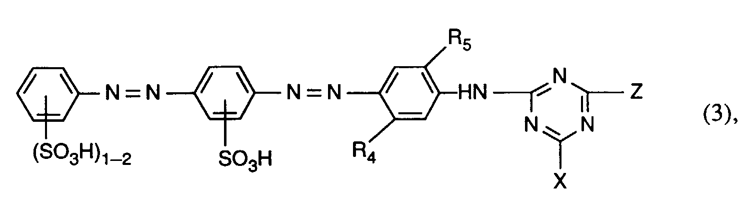 worin R₄ Wasserstoff, Methoxy oder Ureido ist, R₅ für Wasserstoff, Methyl oder Methoxy steht, X Fluor oder Chlor bedeutet und Z eine aliphatische, araliphatische, aromatische oder heterocyclische von faserreaktiven Resten freie Aminogruppe oder ein Rest -NH-SO₂-(CH₂)₂-OSO₃H ist.

4. Reaktivfarbstoffe gemäss Anspruch 3, worin Z eine aromatische Aminogruppe ist.

5. Reaktivfarbstoffe gemäss Anspruch 3, worin Z ein Sulfo- oder Disulfophenylaminorest ist.

6. Reaktivfarbstoffe gemäss Anspruch 3 der Formel 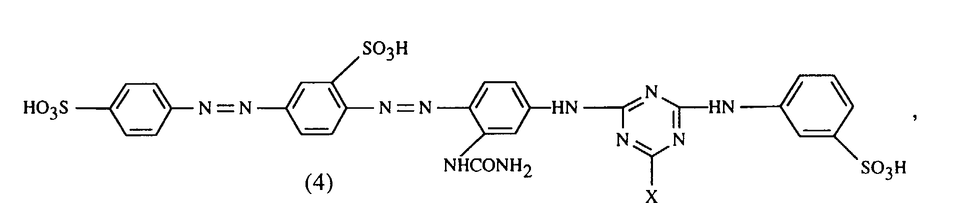 worin X Fluor oder Chlor ist.

7. Verfahren zur Herstellung von Reaktivfarbstoffen der Formel (3) gemäss Anspruch 3, dadurch gekennzeichnet, dass man eine Aminodisazoverbindung der Formel 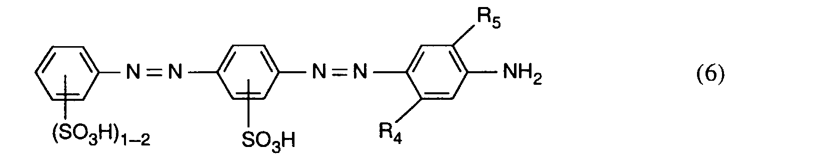 mit einem Triazin der Formel 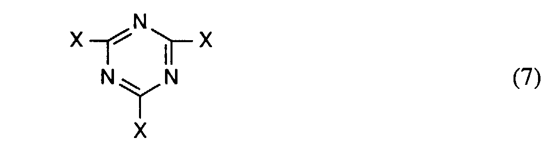 und einem Amin der Formel
H-Z (8)
in beliebiger Reihenfolge miteinander kondensiert, wobei R₄, R₅, X und Z die in Anspruch 3 angegebenen Bedeutungen haben.

8. Verwendung der Reaktivfarbstoffe gemäss einem der Ansprüche 1 bis 7 zum Färben oder Bedrucken von cellulosehaltigen Fasermaterialien.

9. Verwendung gemäss Anspruch 8 zum Färben oder Bedrucken von Baumwolle.

## Patentansprüche (Patentansprüche für folgende(n) Vertragsstaat(en): ES)

1. Verfahren zur Herstellung von Reaktivfarbstoffen der Formel 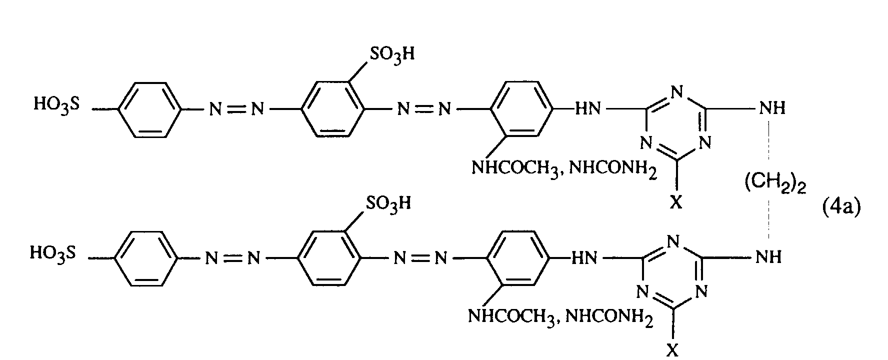 oder 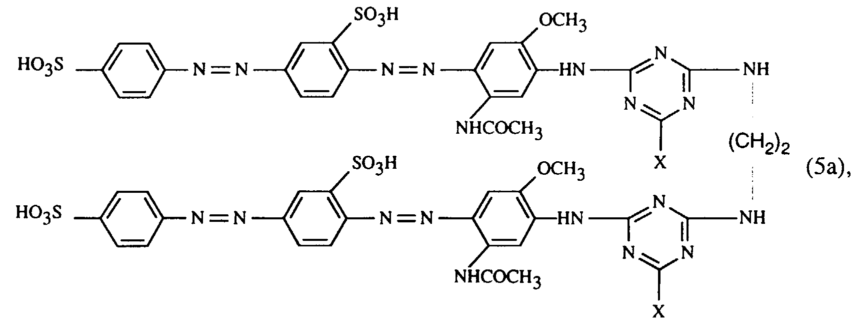 worin X Fluor oder Chlor ist, dadurch gekennzeichnet, dass man mindestens die zweifach molare Menge Aminodisazoverbindung der Formel 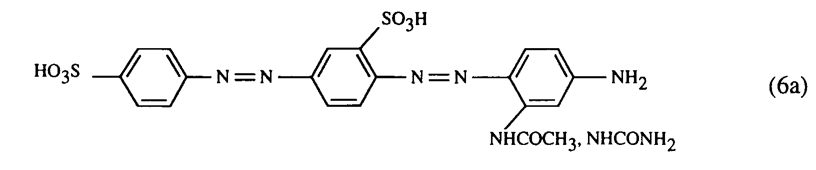 oder 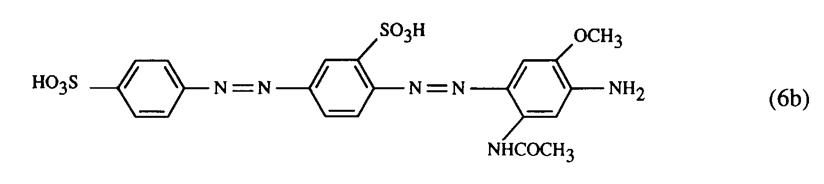 mit der zweifach molaren Menge Triazin der Formel 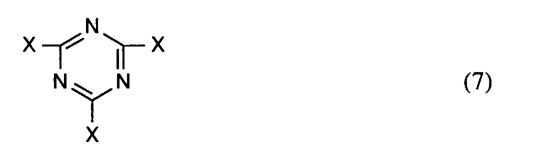 und einer molaren Menge 1,2-Ethylendiamin
in beliebiger Reihenfolge miteinander kondensiert, wobei X die oben angegebene Bedeutung hat.

2. Verfahren gemäss Anspruch 1 zur Herstellung von Reaktivfarbstoffen gemäss Anspruch 1, worin X Chlor ist.

3. Verfahren zur Herstellung von Reaktivfarbstoffen der Formel 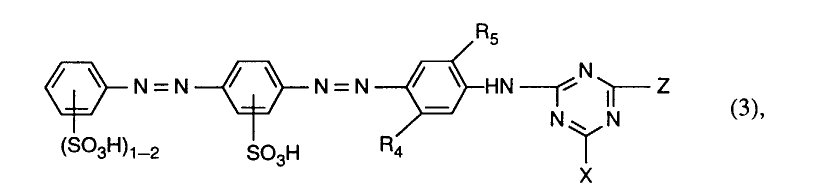
worin R₄ Wasserstoff, Methoxy oder Ureido ist, R₅ für Wasserstoff, Methyl oder Methoxy steht, X Fluor oder Chlor bedeutet und Z eine aliphatische, araliphatische, aromatische oder heterocyclische von faserreaktiven Resten freie Aminogruppe ist, dadurch gekennzeichnet, dass man eine Aminodisazoverbindung der Formel 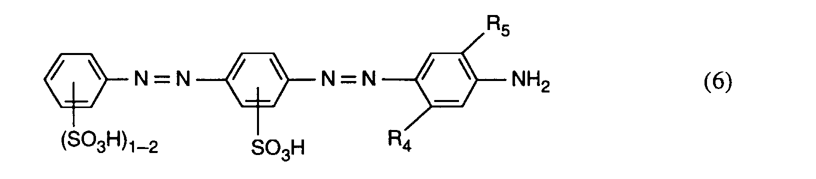 mit einem Triazin der Formel 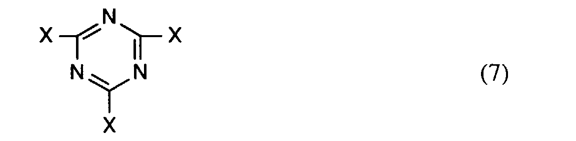 und einem Amin der Formel
H-Z (8)
in beliebiger Reihenfolge miteinander kondensiert.

4. Verfahren gemäss Anspruch 3, worin Z eine aromatische Aminogruppe ist.

5. Verfahren gemäss Anspruch 3, worin Z ein Sulfo- oder Disulfophenylaminorest ist.

6. Verfahren gemäss Anspruch 3 zur Herstellung von Reaktivfarbstoffen der Formel 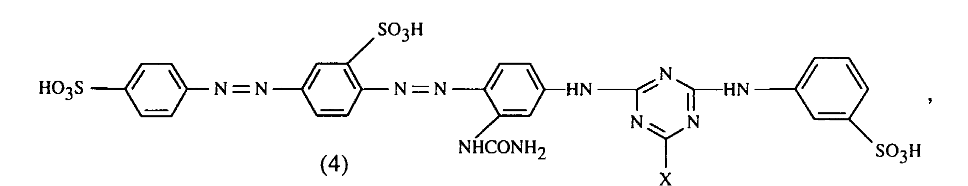 worin X Fluor oder Chlor ist.

7. Verwendung der gemäss einem der Ansprüche 1 bis 6 herstellbaren Reaktivfarbstoffe zum Färben oder Bedrucken von cellulosehaltigen Fasermaterialien.

8. Verwendung gemäss Anspruch 7 zum Färben oder Bedrucken von Baumwolle.

## Claims (Claims for the following Contracting State(s): BE, CH, DE, GB, FR, IT, LI)

1. Reactive dyes of the formula 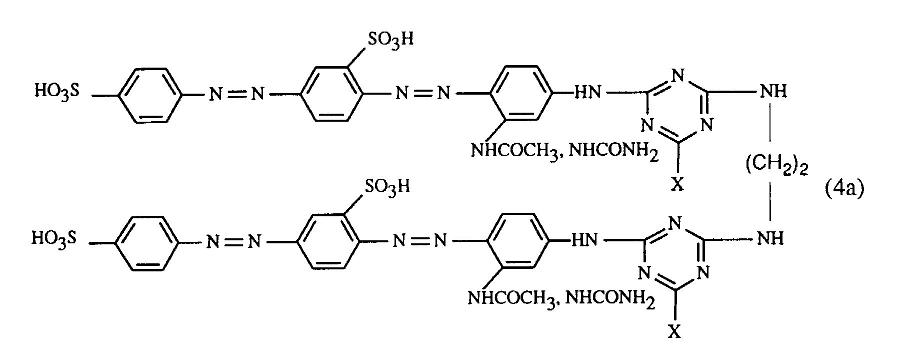 or 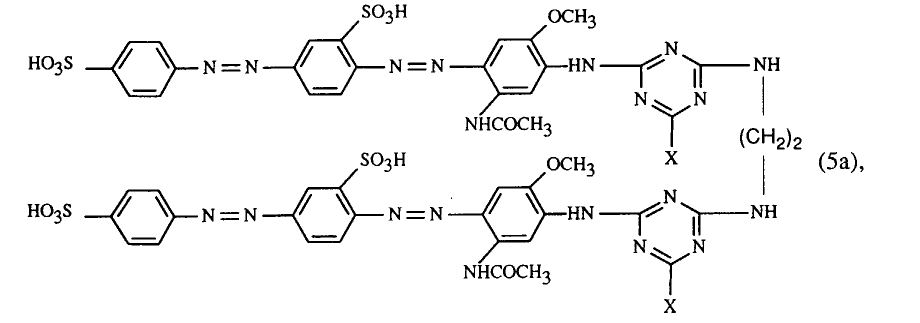 in which X is fluorine or chlorine.

2. Reactive dyes according to claim 1, in which X is chlorine.

3. Reactive dyes of the formula 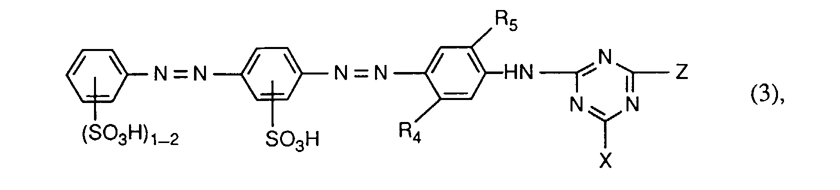 in which R₄ is hydrogen, methoxy or ureido, R₅ is hydrogen, methyl or methoxy, X is fluorine or chlorine and Z is an aliphatic, araliphatic, aromatic or heterocyclic amino group free from fibre-reactive radicals or is a radical -NH-SO₂-(CH₂)₂-OSO₃H.

4. Reactive dyes according to claim 3, in which Z is an aromatic amino group.

5. Reactive dyes according to claim 3, in which Z is a sulfo- or disulfophenylamino radical.

6. Reactive dyes according to claim 3, of the formula 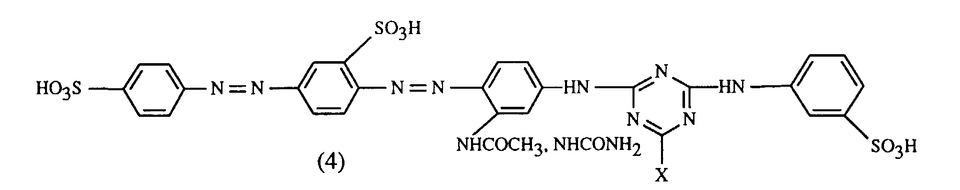 in which X is fluorine or chlorine.

7. A process for preparation of reactive dyes of the formula (3) according to claim 3, characterized in that it comprises condensing an aminodisazo compound of the formula 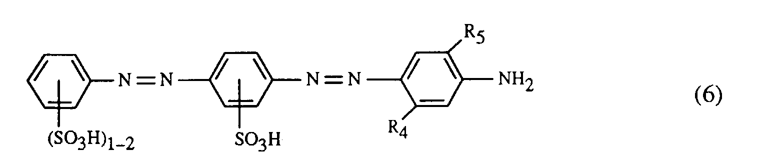 with a triazine of the formula 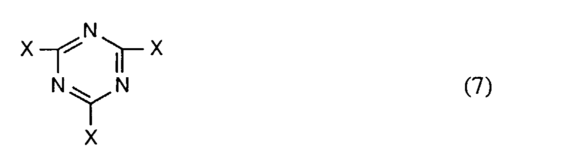 and an amine of the formula
H-Z (8)
where R₄, R₅, X and Z are as defined in claim 3, with one another in any desired order.

8. Use of the reactive dyes according to any one of claims 1 to 7, for dyeing or printing of cellulosic fibre materials.

9. Use according to claim 8, for dyeing or printing of cotton.

## Claims (Claims for the following Contracting State(s): ES)

1. A process for preparing reactive dyes of the formula 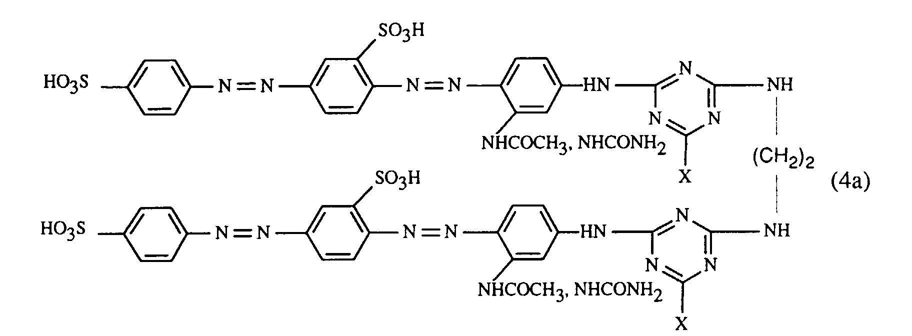 or 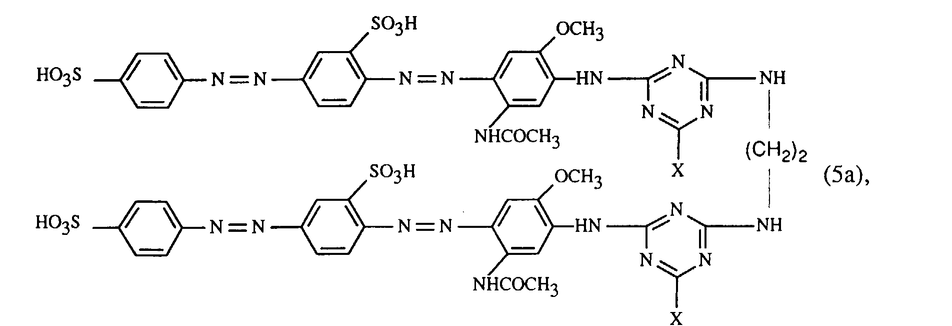 in which X is fluorine or chlorine, characterized in that it comprises condensing at least twice the molar amount of aminodisazo compound of the formula 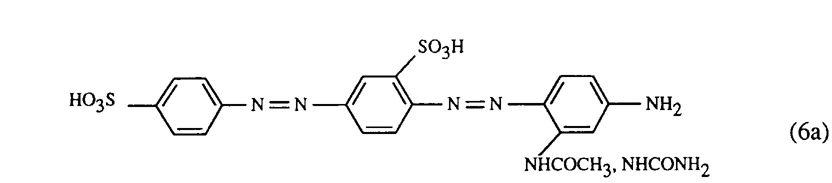 or 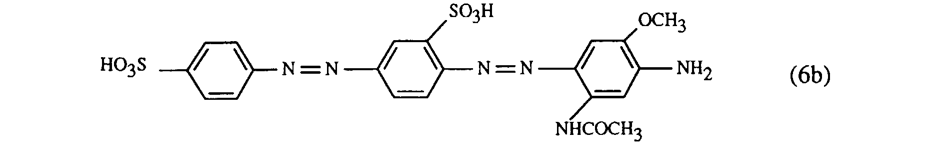 with twice the molar amount of triazine of the formula 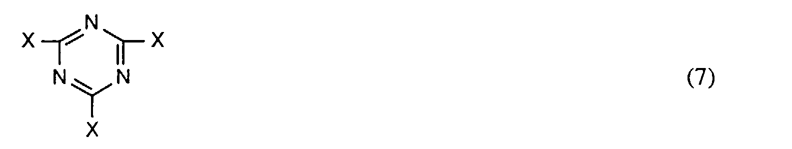 and a molar amount of 1,2-ethylenediamine with one another in any desired order, X being as defined above.

2. A process according to claim 1 for preparing reactive dyes according to claim 1, wherein X is chlorine.

3. A process for preparing reactive dyes of the formula 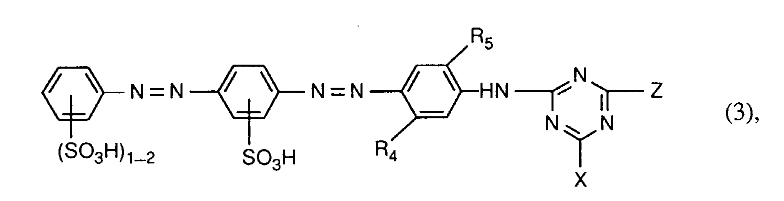 in which R₄ is hydrogen, methoxy or ureido, R₅ is hydrogen, methyl or methoxy, X is fluorine or chlorine and Z is an aliphatic, araliphatic, aromatic or heterocyclic amino group free from fibre-reactive radicals, characterized in that it comprises condensing an aminodisazo compound of the formula 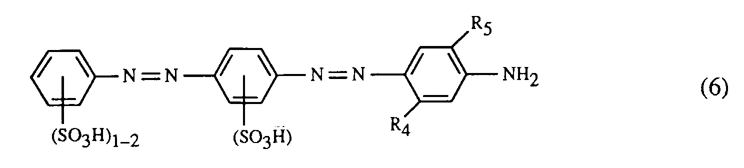 with a triazine of the formula 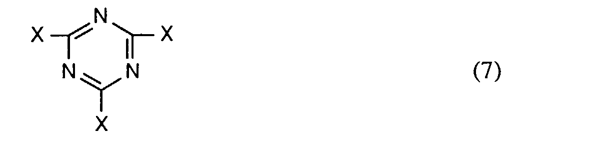 and an amine of the formula
H-Z (8)
with one another in any desired order.

4. A process according to claim 3, wherein Z is an aromatic amino group.

5. A process according to claim 3, wherein Z is a sulfo- or disulfophenylamino radical.

6. A process according to claim 3 for preparing reactive dyes of the formula 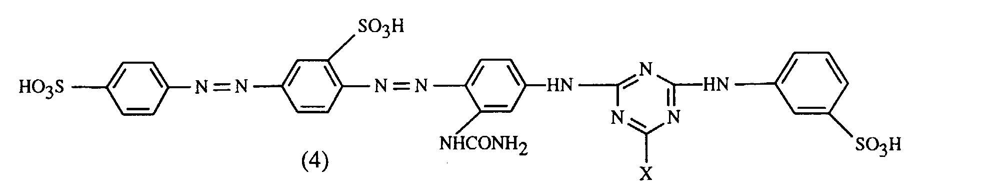 in which X is fluorine or chlorine.

7. Use of the reactive dyes preparable according to any one of claims 1 to 6, for dyeing or printing of cellulosic fibre materials.

8. Use according to claim 7, for dyeing or printing of cotton.

## Revendications (Revendications pour l'(les) Etat(s) contractant(s) suivant(s): BE, CH, DE, FR, GB, IT, LI)

1. Colorants réactifs de formule 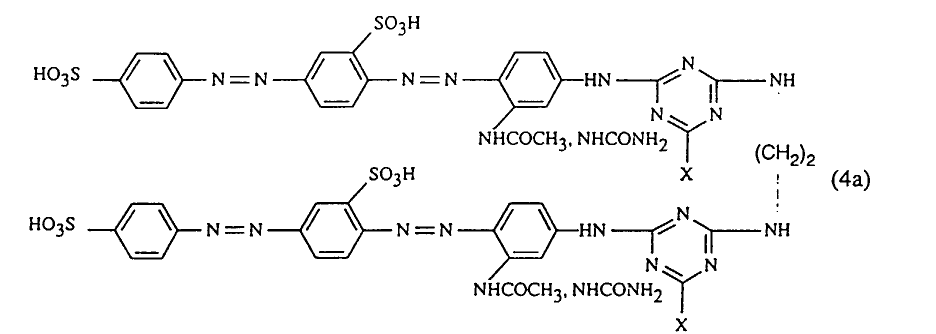 ou 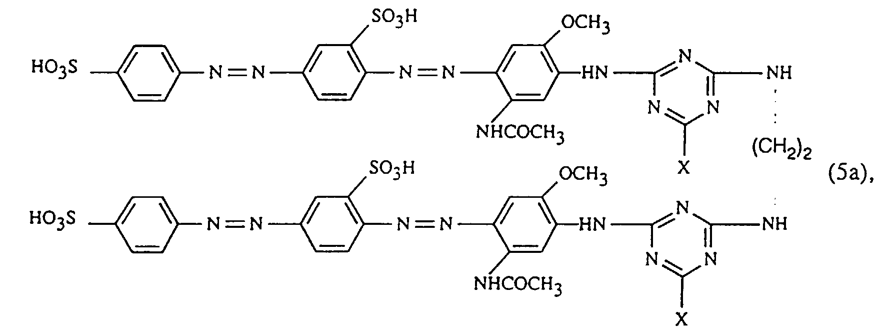 dans lesquelles X représente un atome de fluor ou de chlore.

2. Colorants réactifs conformes à la revendication 1 dans lesquels X représente un atome de chlore.

3. Colorants réactifs de formule 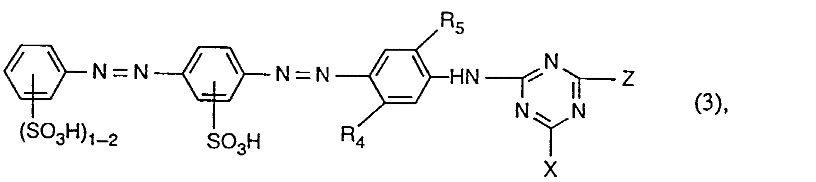 dans laquelle R₄ représente un atome d'hydrogène, un groupe méthoxy ou uréido, R₅ représente un atome d'hydrogène, un groupe méthyle ou méthoxy, X représente un atome de fluor ou de chlore, et Z représente une fonction amine aliphatique, araliphatique, aromatique ou hétérocyclique exempte de résidus réactifs vis-à-vis des fibres ou un résidu -NH-SO₂-(CH₂)₂-OSO₃H.

4. Colorants réactifs conformes à la revendication 3 dans lesquels Z représente une fonction amine aromatique.

5. Colorants réactifs conformes à la revendication 3 dans lesquels Z représente un résidu sulfophénylamino ou disulfophénylamino.

6. Colorants réactifs conformes à la revendication 3 de formule 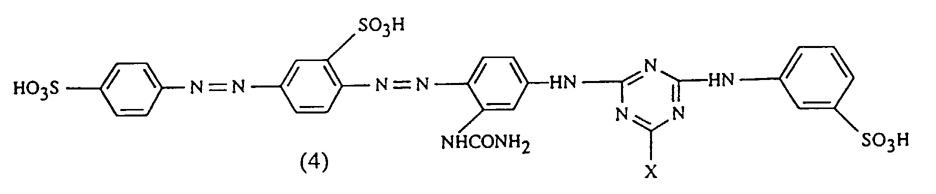 dans laquelle X représente un atome de fluor ou de chlore.

7. Procédé pour la préparation de colorants réactifs de formule (3) conformes à la revendication 3, caractérisé en ce que l'on condense, dans n'importe quel ordre, un composé aminodiazoïque de formule 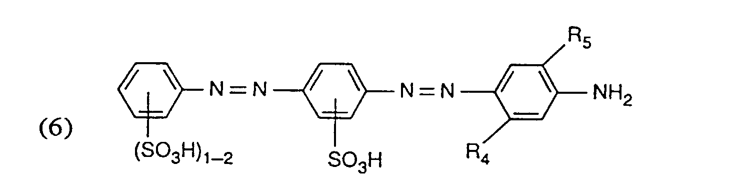 avec une triazine de formule 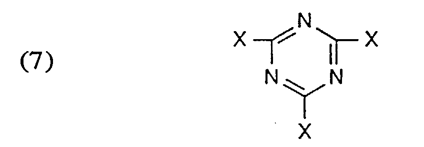 et une amine de formule
(8) H-Z
les résidus R₄, R₅, X et Z ayant la signification indiquée dans la revendication 3.

8. Utilisation des colorants réactifs conformes à l'une des revendications 1 à 7 pour la teinture ou l'impression de matériaux fibreux contenant de la cellulose.

9. Utilisation conforme à la revendication 8 pour la teinture ou l'impression de coton.

## Revendications (Revendications pour l'(les) Etat(s) contractant(s) suivant(s): ES)

1. Procédé de préparation de colorants réactifs de formule 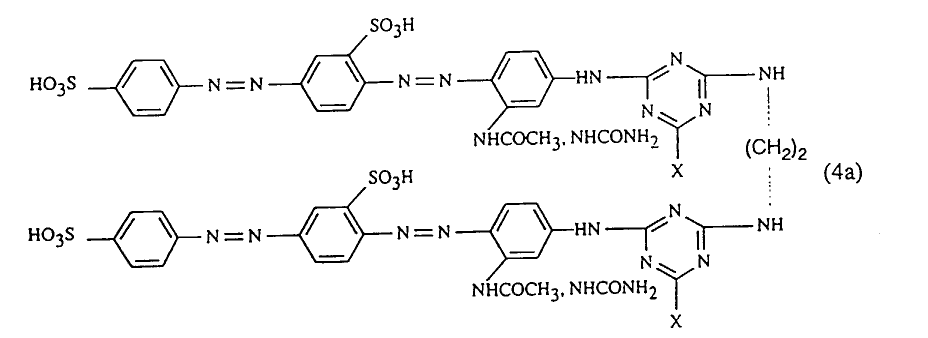 ou 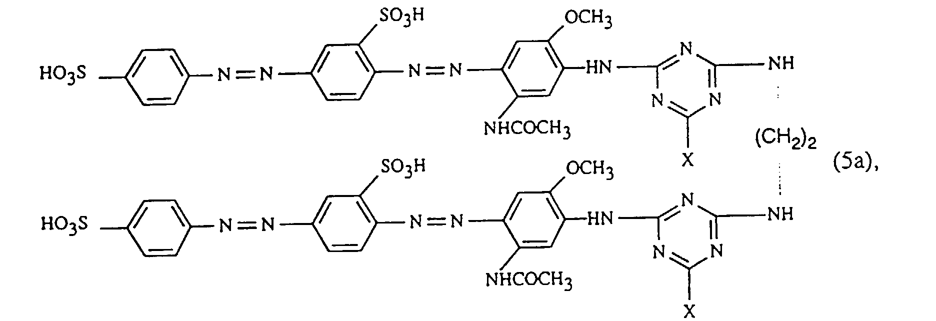 dans lesquelles X représente un atome de fluor ou de chlore, caractérisé en ce que l'on condense, dans n'importe quel ordre, au moins deux équivalents molaires d'un composé aminodiazoïque de formule 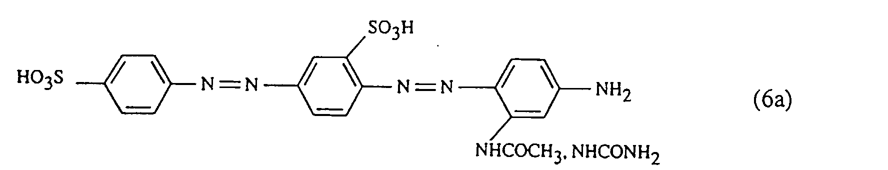 ou 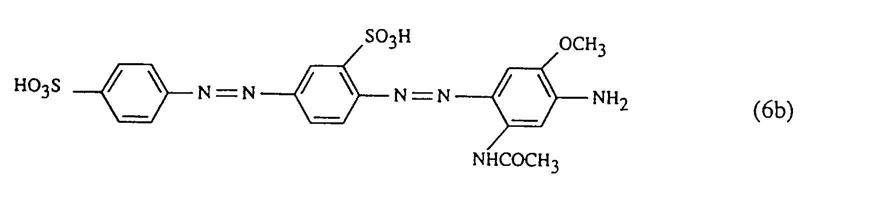 avec deux équivalents molaires d'une triazine de formule 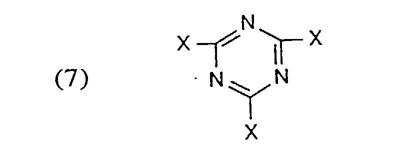 et un équivalent molaire de 1,2-éthylènediamine, X ayant la signification indiquée ci-dessus.

2. Procédé conforme à la revendication 1 pour la préparation de colorants réactifs conformes à la revendication 1 dans lesquels X représente un atome de chlore.

3. Procédé de préparation de colorants réactifs de formule 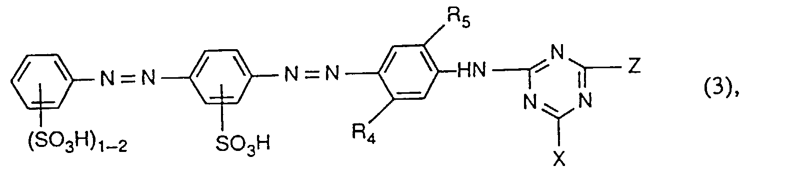 dans laquelle R₄ représente un atome d'hydrogène, un groupe méthoxy ou uréido, R₅ représente un atome d'hydrogène, un groupe méthyle ou méthoxy, X représente un atome de fluor ou de chlore, et Z représente une fonction amine aliphatique, araliphatique, aromatique ou hétérocyclique exempte de résidus réactifs vis-à-vis des fibres, caractérisé en ce que l'on condense, dans n'importe quel ordre, un composé aminodiazoïque de formule 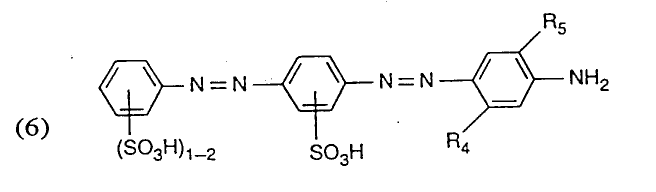 avec une triazine de formule 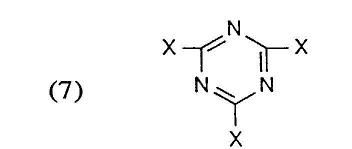 et une amine de formule
(8) H-Z

4. Procédé conforme à la revendication 3 où Z représente un groupe amino aromatique.

5. Procédé conforme à la revendication 3 où Z représente un groupe sulfophénylamino ou disulfophénylamino.

6. Procédé conforme à la revendication 3 pour la préparation de colorants réactifs de formule 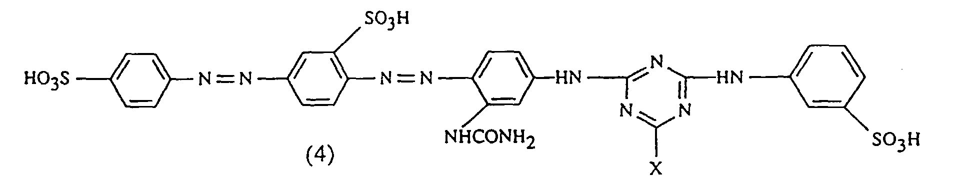 dans laquelle X représente un atome de fluor ou de chlore.

7. Utilisation des colorants réactifs pouvant être préparés selon une des revendications 1 à 6 pour la teinture ou l'impression de matériaux fibreux contenant de la cellulose.

8. Utilisation conforme à la revendication 7 pour la teinture ou l'impression de coton.
